# EUROPÄISCHE PATENTSCHRIFT

(11) **EP 0 536 436 B1**
(45) Veröffentlichungstag und Bekanntmachung des Hinweises auf die Patenterteilung: **13.07.1994**
(21) Anmeldenummer: 91117214.6
(22) Anmeldetag: 09.10.1991
(51) Int. Cl.: B23H 1/02

(54) **Verfahren zur automatischen Steuerung des Prozesses der Elektroerosionsbearbeitung von Metallen und Legierungen**
Automatic control method for electro erosion machining of metals and alloys
Méthode de commande automatique d'un processus d'usinage par électro-érosion de métaux et d'alliages

(43) Veröffentlichungstag der Anmeldung: 14.04.1993
(73) Patentinhaber: Otto, Mark, 61000 Ljubljana (SI); Dobovsek, Marjan, 61000 Ljubljana (SI)
(72) Erfinder: Otto, Mark, 61000 Ljubljana (SI); Dobovsek, Marjan, 61000 Ljubljana (SI)
(74) Vertreter: Berg, Gert

(56) Entgegenhaltungen:
- CH-A- 650 433
- DE-A- 3 416 249
- FR-A- 2 306 780
- FR-A- 2 460 177

## Beschreibung

Die Erfindung bezieht sich auf ein Verfahren zur automatischen Steuerung des Prozesses der Funkenerosionsbearbeitung von Metallen und Legierungen.

Ein solches Verfahren wird zweckmäßigerweise zur Steigerung der Produktivität des Erodiervorganges und der Bearbeitungsgenauigkeit sowie zum Ausschließen einer Beschädigung von Teilen mit kompliziertem Profil und Teilen aus schwerbearbeitbaren stromleitenden Werkstoffen benutzt

Bekannte Verfahren zur automatischen Steuerung benutzen Eingangssignale, welche ungenügenden Informationsinhalt haben und deshalb ein Ausschließen einer Elektrodenbeschädigung nicht garantieren können.

Es ist ein"Verfahren zur automatischen Steuerung der Elektroerosionsbearbeitung von Metallen und Legierungen" bekannt, (M.SCH. Otto, Schweizpatent N 647180, Priorität 28.06.1979), das in der periodischen Messung der Amplitude der Wechselkomponente des elektrischen Widerstandes des durch die Werkzeugelektrode und Werkstückelektrode aus dem zu bearbeitenden Metall gebildeten Elektrodenabstandes in den nach Dauer und Frequenz gleichbleibenden Pausen zwischen den Entladungsimpulsgruppen besteht und in der Änderung nach den Meßergebnissen des zugeführten Verbrauches der Bearbeitungszone von Arbeitsflüssigkeit besteht.

Das erwähnte Verfahren gestattet, den Verbrauch der Arbeitsflüssigkeit zu optimieren, wenn es möglich ist, mit Spülung der Arbeitsflüssigkeit zu arbeiten.

Die moderne Tendenz in der Technologie des Senkerososionsprozesses besteht aber darin, ohne Spülung der Arbeitsflüssigkeit relativ komplizierte Werkzeuge zu fertigen. In diesen Falle sind die adaptiven Stromkorrekturen und die Steuerung des Abstandes zwischen Elektroden die wichtigsten Steuerungskanäle, welche auf die Prozessänderungen möglichst schnell reagieren sollen.

Das erwähnte Verfahren gestattet dieses nicht , weil für eine effektive Analyse die Messung von vielen Signalen, welche den Wert der Amplitude der der Wechselkomponente des elektrischen Widerstandes des durch die Werkzeugelektrode und die Werkstückelektrode aus dem zu bearbeitenden Metall gebildeten Elektrodenabstandes proportional sind, erforderlich wird.

Das erwähnte Verfahren gestattet es auch nicht, eine rechtzeitige Stromkorrektur zu realisieren, weil, nach diesem Verfahren die Zeit der Pausen zwischen den Entladungsimpulsgruppen nicht gesteuert ist.

Der Erfindung liegt die Aufgabe zugrunde, ein Verfahren zur automatischen Steuerung der Elektroerosionsbearbeitung von Metallen und Legierungen anzugeben, bei dem die Steuerung es gestattet, die Produktivität des Erodiervorganges zu vergrößern, den Werkzeugverschleiß zu vermindern, und eine Beschädigung der Elektroden auszuschließen.

Die gestellte Aufgabe wird durch die im Anspruch 1 angegebenen Merkmale gelöst.

Grundsätzlich neu bei dem erfindungsgemäßen Verfahren sind die Benutzung der Pausen zwischen den gleichbleibenden Gruppen von Entladungsimpulsen gleichzeitig für die Messung des elektrischen Widerstandes des durch die Werkzeugelektrode und die Werkstückelektrode aus dem zu bearbeitenden Metall gebildeten Arbeitsspaltes und für die Entladungsstromkorrektur auch noch die Verwendung der Abhängigkeit der Weglänge des schnellen Rückhubes der Werkzeugelektrode von der Häufigkeit des Auftretens und der Dauer der Entladungskonzentration auf dem lokalen Abschnitt der Bearbeitungszone.

Darüber hinaus ist bei diesem Verfahren die Möglichkeit gegeben, eine für die Bearbeitung ohne Spülung der Arbeitsflüssigkeit möglichst maximale Leistung bei minimalem Verschleiß der Werkzeugelektrode einzustellen.

Die Abschaltung des Entladungsstromes in der ersten Hälfte der Zeit des Impulses, wenn die Entladung abnormal ist, gestattet es auch, Beschädigungen der Werkzeugelektrode, die mit einer Schlackenbildung in der Bearbeitungszone verbunden sind, auszuschließen.

Nachstehend soll die Erfindung anhand eines konkreten Ausführungsbeispiels erläutert werden.

### Beispiel:

Es wurde ein Werkstück mit scharfer Ecke und kompliziertem Profil ohne Spülung der Arbeitsflüssigkeit bearbeitet. Die Bearbeitungsfläche der Werkzeugelektrode wurde mit Verteilung von 0,5 bis 500 mm² geändert, hierbei war ein Tiefendurchschlag von 50 mm im Schrupp-, Vorschlicht- und Schlichtregime mit einer Oberflächenrauhheit von etwa 1,6 »m erreicht.

Sodann wurden der elektrische Widerstand des durch die Werkzeugelektrode und Werkstückelektrode gebildeten Elektrodenabstandes in den Pausen zwischen den gleichbleibenden Entladungsgruppen und die Spannungsparameter zwischen Werkzeug- und Werkstückelektroden in der Zeit der Entladung (Spannungsamplitude, Form der Spannungskurve, Spannungsoscillationen und so weiter) gemessen.

Bei der Verminderung des Wertes des elektrischen Widerstandes bis auf eine bestimmte kritische Konstante, welche der Konzentration der Entladungsimpulse auf einem lokalen Abschnitt der Bearbeitungszone entspricht, waren die obengenannten Pausen zwischen den Entladungsimpulsgruppen und der Abstand zwischen Werkzeug- und Werkstückelektroden ohne Prozessunterbrechung, bis auf den Wert vergrößert worden, durch welchen der elektrische Widerstand des Elektrodenabstandes vergrößert wird.

Im Falle, wenn der obengenannte kritische Wert des elektrischen Widerstandes sich einige Male wiederholt hat, wurde der schnelle Rückhub der Werkzeugelektrode, mit Unterbrechung des Bearbeitungsprozesses in solcher Weise aktiviert, daß die Länge des Rückhubes der Häufigkeit des Auftretens und der Dauer der Existenz der Entladungskonzentration auf dem lokalen Abschnitt der Bearbeitungszone proportional war.

Im Falle, wenn die Höhe der Spannung zwischen den Elektroden in der ersten Hälfte der Entladungszeit abnormal wurde, war der Entladungsstrom bis zum Anfang des folgenden Impulses abgeschaltet worden.

Bei geringerer Bearbeitungstiefe war die Stromdichte relativ hoch ( bis 10 A/cm²), und 5 - 8 % der Entladungen waren abnormal. Sie waren abgeschaltet, ohne den Erodiervorgang zu verschlechtern.

Mit zunehmender Bearbeitungstiefe der Werstückes (bis 5 - 7 mm) war die Stabilität des Erodiervorganges schlechter geworden, und die Höhe des elektrischen Widerstandes des Elektrodenabstandes war bis zum kritischen Wert vermindert.
Dann waren die obengenannten Pausen zwischen den Entladungsimpulsgruppen und der Abstand zwischen der Werkzeug- und Werkstückelektrode (mit Hilfe der Elektrodenabstandssteuerung) bis zu demjenigen Wert vergrößert, welcher den elektrischen Widerstand des Elektrodenabstandes vergrößert hat.

Bei einer Bearbeitungstiefe von 10 - 12 mm haben jedoch diese Maßnahmen keinen wesentlichen Einfluß mehr auf den Wert des elektrischen Widerstandes des Elektrodenabstandes.

Dann wurden die obengenannten schnellen Rückhübe der Werkzeugelektrode aktiviert. Dadurch war die Bearbeitung ohne Spülung des Werkstückes bis auf eine Tiefe von 50 mm ohne Beschädigung der Werkzeugelektrode möglich geworden; gleichzeitig waren die Produktivität des Erodiervorganges und die Bearbeitungsgenauigkeit um 50 - 70 % höher geworden.

## Patentansprüche

1. Verfahren zur automatischen Prozessteuerung der Funkenerosionsbearbeitung von Metallen und Legierungen, bei dem der elektrische Widerstand des durch eine Werkzeug- und eine Werkstückelektrode gebildeten Arbeitsspaltes in den Pausen zwischen gleichbleibenden Gruppen von Entladungsimpulsen und die Spannung zwischen den beiden Elektroden während der Entladung gemessen, und aufgrund der Messergebnisse der Entladungsstrom und der Elektrodenabstand gesteuert werden, dadurch gekennzeichnet, daß in Abhängigkeit von einer Konzentration der Entladungsimpulse auf einen lokalen Abschnitt der Bearbeitungszone, welche durch die in der Pause zwischen den gleichbleibenden Gruppen von Entladungsimpulsen gemessene Größe des elektrischen Widerstandes des Arbeitsspaltes bestimmt wird, die Pausenzeiten zwischen den gleichbleibenden Gruppen von Entladungsimpulsen geändert werden, wobei ein schneller Rückhub der Werkzeugelektrode mit einer Unterbrechung des Bearbeitungsprozesses so durchgeführt wird, daß der Rückhubweg der Häufigkeit des Auftretens und der Dauer der Entladungskonzentration auf dem lokalen Abschnitt der Bearbeitungszone proportional ist.

2. Verfahren nach Anspruch 1, dadurch gekennzeichnet, daß falls die Höhe der Spannung zwischen den Elektroden oder die Form der Kurve der Entladungsspannung in der ersten Hälfte der Entladungszeit abnornal werden, der Entladungsstrom bis zum Anfang des folgenden Impulses abgeschaltet wird.

## Claims

1. Method for the automatic process control of spark erosion treatment of metals and alloys, in which the electrical resistance of the work gap, which is formed by a tool electrode and a workpiece electrode, in the intervals between uniform trains of discharge pulses and the voltage between the two electrodes during the discharge are measured and the discharge current and electrode spacing are controlled on the basis of the measurement results, characterised thereby that the interval times between the uniform trains of discharge pulses are changed in dependence on a concentration of the discharge pulses at a local section of the treatment zone, which is determined by the magnitude, measured in the interval between the uniform trains of discharge pulses, of the electrical resistance of the work gap, wherein a rapid return stroke of the tool electrode is so carried out with an interruption of the treatment process that the return stroke travel is proportional to the frequency of the occurrence and the duration of the discharge concentration at the local section of the treatment zone.

2. Method according to claim 1, characterised thereby, that in the case the height of the voltage between the electrodes or the shape of the curve of the discharge voltage is abnormal in the first half of the discharge time the discharge current is switched off until the start of the following pulse.

## Revendications

1. Procédé de commande automatique d'un processus d'usinage par électroérosion de métaux et alliages, dans lequel la résistance électrique de la fente de travail formée par une électrode d'outil et une électrode de pièce à usiner est mesurée dans les pauses entre des groupes constants d'impulsions de décharge et dans lequel la tension entre les deux électrodes est mesurée pendant la décharge, le courant de décharge et l'écartement des électrodes étant commandé sur la base des résultats de mesure, caractérisé en ce que les durées des pauses entre les groupes constants d'impulsions de décharge sont modifiées en fonction d'une concentration des impulsions de décharge sur un segment local de la zone d'usinage, qui est déterminé par la grandeur de la résistance électrique de la fente de travail qui est mesurée dans la pause entre les groupes constants d'impulsions de décharge, une course de retour rapide de l'électrode d'outil étant effectuée avec une interruption du processus d'usinage de telle manière que la course de retour est proportionnelle à la fréquence de l'apparition et à la durée de la concentration de décharge sur le segment local de la zone d'usinage.

2. Procédé selon la revendication 1, caractérisé en ce qu'au cas où la hauteur de la tension entre les électrodes ou la forme de la courbe de la tension de décharge dans la première moitié du temps de décharge deviennent anormales, le courant de décharge est coupé jusqu'au début de l'impulsion suivante.
